Europäisches Patentamt

European Patent Office

Office européen des brevets

(19)

(11) Publication number: **0 081 869**
**B1**

(12) **EUROPEAN PATENT SPECIFICATION**

(45) Date of publication of patent specification: **16.06.87**

(51) Int. Cl.⁴: **B 29 C 65/08,** B 29 C 53/04, B 01 D 13/04

(21) Application number: **82201494.0**

(22) Date of filing: **25.11.82**

(54) A non-woven tube for membrane filtration and method of forming same.

(30) Priority: **14.12.81 NL 8105621**

(43) Date of publication of application:
**22.06.83 Bulletin 83/25**

(45) Publication of the grant of the patent:
**16.06.87 Bulletin 87/25**

(84) Designated Contracting States:
**AT BE CH DE FR GB IT LI LU NL SE**

(56) References cited:
DE-A-2 629 719
FR-A-2 276 860
FR-A-2 380 129
FR-A-2 477 962
GB-A-1 256 491
US-A-4 214 612

(73) Proprietor: **STORK FRIESLAND B.V.**
**Stationsweg 84**
**NL-8401 DT Gorredijk (NL)**

(72) Inventor: **van Zon, Cornelis**
**12 Dennenlaan**
**NL-8024 BD Zwolle (NL)**
Inventor: **Jonkeren, Gerrit Jan**
**4 Broekdijk**
**NL-7698 TD Bruchterveld (NL)**
Inventor: **Eggengoor, Hilbert**
**55 Broekdijk**
**NL-7695 TC Bruchterveld (NL)**

(74) Representative: **van der Veken, Johannes**
**Adriaan et al**
**EXTERPATENT B.V. Willem Witsenplein 4**
**NL-2596 BK 's-Gravenhage (NL)**

Courier Press, Leamington Spa, England.

## Description

The present invention relates to a tube of a heat-sealable non-woven material comprising a longitudinally or helically extending connecting seal, more particularly a longitudinal seal obtained by ultrasonic sealing, said tube being a composite tube comprising an inner non-woven tube and an outer non-woven tube surrounding the inner non-woven tube and each comprising a longitudinally extending connecting seal, said inner tube of non-woven material supporting on its inner side a membrane for membrane filtration.

Such a tube in which the longitudinally extending connecting seals of both tubes coincide and form one integral seal, in order to use the seals as a tearing element, is known from FR—A—2.276.860.

This tube presents the disadvantage that if a membrane in such a tube of non-woven material is subjected to a high internal pressure during a membrane filtration, said pressure may give rise to slight expansions of the membrane so that, especially in the regions where the fibers of the non-woven are sealed to each other, cracks may occur in said membranes so that they have to be discarded. This disadvantage also holds for tubes of non-woven material comprising a helically extending connecting seal. For reasons of simplicity in the following specification only the expression "a longitudinally extending connecting seal" is used for the longitudinally or helically extending connecting seal.

Evidently the formation of such cracks might be prevented by using a more flexible longitudinal seal viz. a seal of less strongly interfused fibers but this is impossible as the longitudinal seal has to meet high critical demands as otherwise interruptions may occur in the apparatus having high production speeds.

It is an additional drawback of this known tube of non-woven material that the use of rather thin non-woven material causes the obtained tube to be relatively smooth which entails a difficult instalment in an apparatus for membrane filtration in which such tubes of non-woven material comprising on their inner side a membrane are accommodated in a pressure-resistant support tube.

At last tubes of non-woven material are known in which use is made of connecting strips obtained by employing a glue but they have a drawback that a large strip of the non-woven becomes impermeable to liquids used in membrane filtrations.

The present invention now aims to provide a tube of non-woven material of the aforementioned type which does not present the aforementioned drawbacks.

More particularly the present invention aims to provide a tube of a heat-sealable non-woven material which does not give rise to a crack formation in the membranes when subjecting the latter to high internal pressure and which tube moreover possesses a greater rigidity and permeability to liquids.

This aim is achieved according to the invention in that said non-woven tubes are mutually fixed against shifting, with respect to each other, the connecting seal of the inner non-woven tube and the connecting seal of the outer non-woven tube extend in a staggered manner with respect to each other, and a layer of non-sealed non-woven material of that inner tube is present between the membrane and said outer connecting seal.

It should be noted that FR—A—2.477.962 discloses a tubular profile formed from fibrous plastic strips being accommodated in a staggered manner with respect to each other, said strips being adhered to each other by means of an adhesive. However, the profiles are not provided or used with a membrane and the document does not teach that a staggered arrangement of seals should be used in order to avoid damage to a membrane for membrane filtration being accommodated in the interior of such a tube of non-woven material.

The use of an inner non-woven tube facilitates to provide the outer non-woven tube with a longitudinal seal by ultrasonic sealing which seal need, however, not meet the critical demands as regards a membrane to be provided upon the inner tube of non-woven material.

Irregularities, if any, in a longitudinal seal in the outer non-woven tube obtained by ultrasonic sealing, are incapable of directly impeding membranes provided in the inner non-woven tube, due to the presence of an additional inner tube of non-woven material between the membrane and the outer non-woven tube. Said inner non-woven tube is also provided with a longitudinal seal but it will be clear that said longitudinal seal in the inner non-woven tube need not possess the strength necessary for obviating the high internal pressures to which the filtration membrane upon the inner non-woven tube is subjected.

As the longitudinal seals obtained by ultrasonic sealing are accommodated in the inner and the outer non-woven tube in a staggered manner with respect to each other, the outer non-woven tube may be provided with a heavy longitudinal seal without any notable effect upon the non-woven layer of the inner non-woven tube and a crack in the membrane is absolutely avoided.

The use of two non-woven tubes entails that the required mechanical strength can be obtained by applying a heavy longitudinal seal in the non-woven tube material while the use of a slight longitudinal seal in the non-woven tube will not impair the membrane when the latter is subjected to high internal pressures.

The inner and the outer non-woven tubes are effectively locally interconnected by an adhering means preferably by means of a glue melting in the presence of heat. In this manner the non-woven tube can firstly be made and thereupon be surrounded by the outer non-woven tube, both tubes being provided with a longitudinal seal obtained by ultrasonic sealing, whereupon the assembly is passed through an oven in order to melt the glue without impairing the fibers of the non-woven from which the non-woven tubes are made. It has been found that such tubes of non-woven marterial according to the invention are relatively rigid, notwithstanding the thin non-woven material and that they are more effective than tubes of non-woven material made from a non-woven having a total thickness which equals the thickness of the non-woven used for the present inner and outer non-woven tube.

Such a composite tube of non-woven material according to the invention additionally presents the advantage that the procedure of installing the membranes with the tubes of non-woven material in the supporting tubes, is facilitated which is especially of importance when applying new membranes in exchange for membranes to be discarded.

It has finally been found that the flux values or retention values of the non-woven materials with membranes according to the invention offer favorable results compared with similar tubes of non-woven material comprising similar membranes and made from one single non-woven layer having the same thickness as the total layer of the present non-woven of the inner non-woven tube and the outer non-woven material surrounding the latter.

The outer non-woven tube is effectively thicker than the inner non-woven tube so that an optimum protection against damages of the membrane and prevailing internal pressures is obtained. The ratio of the thickness of inner non-woven tube and outer non-woven tube material is comprised between 1:1 and 1:3.

The longitudinal connecting seal in the outer non-woven tube can effectively be provided after the formation of the longitudinal seal in the inner non-woven tube so that, although a slight local melting of the non-woven of the inner tube may occur, this will not give rise to irregularities of notable structural changes inherent with the formation of a longitudinal seal resistant to high-pressures in a tube of non-woven material made from one single non-woven.

Besides the advantages of good quality of a tube of non-woven material according to the invention, while maintaining less critical conditions during the formation of the longitudinal seal, and a better handling of such a tube of non-woven material even when the latter is wet, it should also be noted that the sensitivity to an implosion of the tube of non-woven material in the modules during the membrane filtration, is decreased with respect to a tube made of a single non-woven and comprising a longitudinal seal.

The present invention also relates to a method of forming a tube of non-woven material from a heat-sealable non-woven material comprising a longitudinally or helically connecting seal, wherein an inner non-woven tube is surrounded by an outer non-woven tube, said non-woven tubes being each provided with a longitudinal seal obtained by an ultrasonic sealing procedure and a membrane for membrane filtration is deposited within the inner tube of non-woven material as known from FR—A—2.276.860, which is characterized in that said inner and outer non-woven tubes are mutually fixed against shifting with respect to each other, the connecting seal of the inner non-woven tube and the connection seal of the outer non-woven tube are applied in a staggered manner and said outer seal is formed in such a way that a layer of non-sealed non-woven material of said inner tube is present between said outer seal and the membrane.

The invention will now be illustrated by means of an embodiment according to the invention with reference to the drawings wherein

Fig. 1 is a perspective view of a tube of non-woven material according to the invention, parts of the outer non-woven tube being removed.

Fig. 2 is a section according to line II—II in Fig. 1;

Fig. 3 is an apparatus for forming a tube of non-woven material according to the invention;

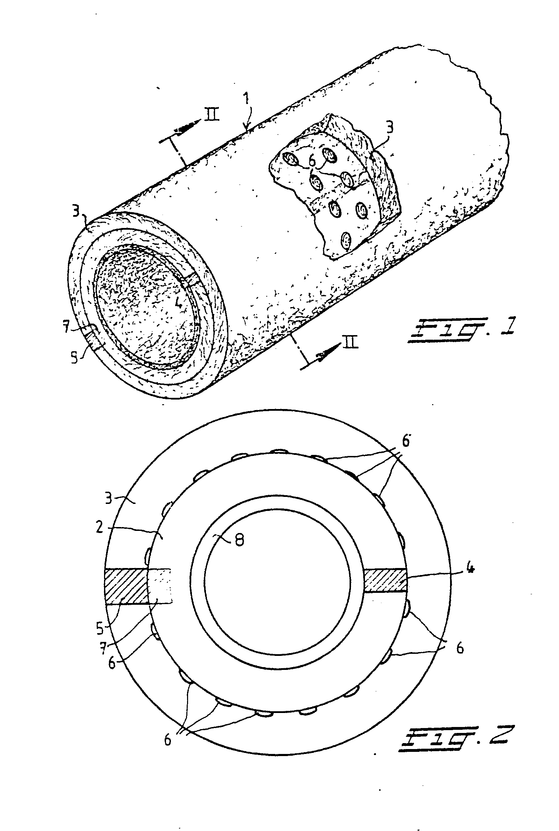

Referring to Figs. 1 and 2, a tube of non-woven material according to the invention consists of an outer non-woven tube 3 made from polyester fibers having a thickness of approximately 0.20 mm and provided with a longitudinal seal 5 provided by ultrasonic sealing.

Within the outer tube of non-woven material 3 an inner tube of non-woven material 2 is provided also consisting of polyester fibers having a thickness of approximately 0.12 mm. Said inner tube of non-woven material 2 can be formed by means of a longitudinal seal 4.

For mutually fixing the inner and the outer non-woven tubes 2 and 3 glue paints 6 are provided which locally fix the tubes of non-woven material to each other.

Upon the innerside of the inner tube of non-woven material 2 a membrane 8 of, for example, cellulose acetate, is provided for a membrane filtration process.

It will be obvious that the longitudinal seal 4 may be relatively weak as the strength required for the non-woven tube may be provided by the longitudinal seal 5 in the outer tube of non-woven material 3. Due to the presence of the latter any chance of damaging the membrane 8 in case that the membrane is subjected to high internal pressures due to the structural change of the non-woven material of the longitudinal seal 4, will be rather slight.

Such a tube of non-woven material offers the great advantage that in case of a membrane exchange said tube can easier be replaced due to its greater rigidity, while yet the same quantity of non-woven is used as for a tube of non-woven material made from a non-woven with a thickness corresponding to the thickness of the non-wovens of the present inner and outer tubes of non-woven material 2, 3 respectively.

Furthermore applying membranes in similar non-wovens is facilitated as the membrane need no longer by pulled into the tubes but may now also be pushed into the tubes. The latter is especially important when membranes are used upon tubes of non-woven which are stored as such, and are only installed in a pressure-resistant supporting tube in a later stage.

Finally, a tube of non-woven material according to the invention can be easier handled than a non-woven tube made of a single non-woven having the same thickness as the former.

It should finally be noted that the resistance to an external over-pressure of similar tubes of non-woven material is considerably greater than that of known tubes of non-woven material having a longitudinal seal and being provided with one single non-woven of the same thickness.

Since the longitudinal seal 5 in the outer tube of non-woven material 3 is applied after the formation of the inner tube of non-woven material 2, the ultrasonic sealing for the formation of the longitudinal seal 5 will also give rise to a certaion melting of the fibers forming the inner tube of non-woven material, which will cause a melting region 7. As can be seen in the figures, said melting region does not extend to the innerside of the inner tube of non-woven material and does not give rise to any damage of the respective membranes, which is supposedly inherent with the fact that the structure of said region 7 differs less from the non-woven than a similar region occurring when a single seal is used for forming the connection and obtaining the desired strength of a longitudinal seal. This counts especially for the side of the non-woven upon which the membrane is being applied.

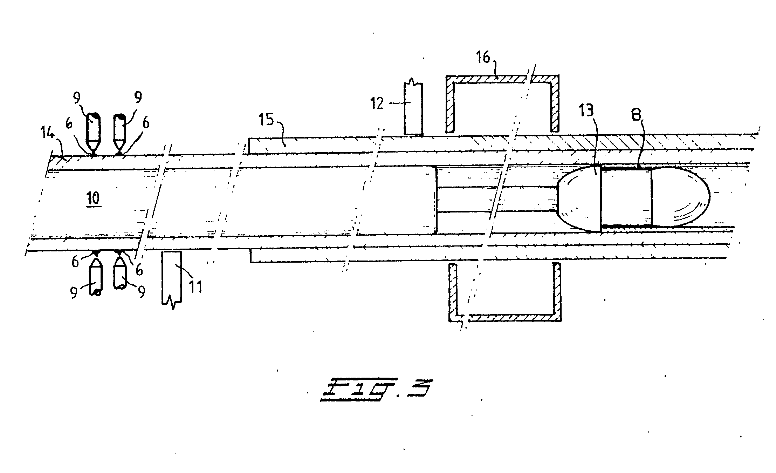

Referring now to Fig. 3 a tube of non-woven material according to the present invention is made by applying a non-woven layer 14 upon a mandril 10 to form the inner tube of non-woven material 2. Simultaneously with this procedure glue-applying members 9 locally apply a glue 6, melting in the presence of heat.

The first longitudinal seal 4 is formed in the non-woven 14 by means of a first ultrasonic sealing member 11 whereby an inner non-woven tube 2 is obtained.

Subsequently another non-woven 15 is applied on the outside of the inner non-woven tube 2 for forming the outer non-woven tube 3. Non-wovens 15 and 14 consist of a polyester or polypropylene fibrous material although other thermoplastic fibrous material may also be used for this purpose; the thickness of the non-woven 14 is e.g. 0.12 mm whilst the thickness of non-woven 15 amounts to e.g. 0.20 mm.

A second ultrasonic sealing member 12 applies the other longitudinal seal 5 in the other non-woven 15 to form the outer non-woven tube 3. After the formation of said other longitudinal seal 5 the assembly is passed through an oven 16 in which the locally applied glue 6 is melted so that a fixation is accomplished of inner non-woven tube 2 and outer non-woven tube 3 surrounding the former.

The non-woven tube so obtained is subsequently passed in a membrane-applying member provided with an internal torpedo-shaped body 13 for applying a membrane of the desired thickness on the inner side of the non-woven tube. The membrane forming substance is e.g. a cellulose acetate solution but it goes without saying that use can also be made of solutions of polyamides, polyimides, polyvinylidene fluorides, polyacrylonitriles, polysulfones, polyether sulfones, polyfenylene oxydes and the like.

## Claims

1. A tube of a heat-sealable non-woven material comprising a longitudinally or helically extending connecting seal, more particularly a longitudinal seal obtained by ultrasonic sealing, said tube being a composite tube (1) comprising an inner non-woven tube (2) and an outer non-woven tube (3) surrounding the inner non-woven tube (2) and each comprising a longitudinally extending connecting seal (4, 5), said inner tube (2) of non-woven material supporting on its inner side a membrane (8) for membrane filtration, characterized in that said non-woven tubes (2, 3) are mutually fixed against shifting, with respect to each other, the connecting seal (4) of the inner non-woven tube (2) and the connecting seal (5) of the outer non-woven tube (3) extend in a staggered manner with respect to each other, and a layer of non-sealed non-woven material of that inner tube (2) is present between the membrane (8) and said outer connecting seal (5).

2. Tube as claimed in claim 1, characterized in that the inner (2) and the outer (3) non-woven tubes are locally interconnected by an adhering means, more particularly a glue (6).

3. Tube as claimed in claim 1 or 2, characterized in that the outer non-woven tube (3) is thicker than the inner non-woven tube (2).

4. Tube as claimed in claims 1 to 3, characterized in that the outer non-woven tube (3) is provided with said longitudinal connecting seal (5) after the formation of the longitudinal seal (4) in the inner non-woven tube (2).

5. Tube as claimed in claims 1 to 4, characterized in that the thickness of the inner non-woven tube (2) with respect to the outer non-woven tube (3) is comprised between 1:1 and 1:3.

6. A method of forming a tube of non-woven material from a heat-sealable non-woven material, comprising a longitudinally or helically extending connecting seal, wherein an inner non-woven tube (2) is surrounded by an outer non-woven tube (3), said non-woven tubes being each provided with a longitudinal seal (4, 5) obtained by an ultrasonic sealing procedure, and a membrane (8) for membrane filtration is deposited within the inner tube of non-woven material, characterized in that said inner and outer non-woven tubes (2, 3) are mutually fixed against shifting with respect to each other, the connecting seal (4) of the inner non-woven tube (2) and the connection seal (5) of the outer non-woven tube are applied in a staggered manner and said outer seal (5) is formed in such a way that a layer of non-sealed non-woven material of said inner tube (2) is present between said outer seal (5) and the membrane (8).

## Patentansprüche

1. Röhre aus einem unter Wärme schmelzbaren Faservliesmaterial, enthaltend eine in Längsrichtung oder schraubenförmig verlaufende Verbindungsschmelzaht, spezieller einer Längsschmelznaht, die man durch Ultraschallaufschmelzung erhält, wobei die Röhre eine zusammengesetzte Röhre (1) ist, enthaltend eine innere Faservliesröhre (2) und eine äußere Faservliesröhre (3), die die innere Faservliesröhre (2) umgibt und die jeweils einen in Längsrichtung verlaufende Verbindungsschmelznaht (4, 5) aufweisen, wobei die innere Röhre (2) aus Faservliesmaterial an ihrer Innenseite eine Membran (8) für Membranfiltration trägt, dadurch gekennzeichnet, daß die Faservliesröhren (2, 3) aneinander gegen gegenseitige Verschiebung befestigt sind, die Verbindungsschmelznaht (4) der innere Faservliesröhre (2) und die Verbindungsschmelznaht (5) der anderen Faservliesröhre (3) sich gegeneinander versetzt erstrecken und eine Schicht aus nicht-verschmolzenem Faservliesmaterial der inneren Röhre (2) zwischen der Membran (8) und der äußeren Verbindungsschmelznaht (5) vorhanden ist.

2. Röhre nach Anspruch 1, dadurch gekennzeichnet, daß die innere (2) und die äußere (3) Faservliesröhre örtlich miteinander durch eine Hafteinrichtung, spezieller einen Klebstoff (6) verbunden sind.

3. Röhre nach Anspruch 1 oder 2, dadurch gekennzeichnet, daß die äußere Faservliesröhre (3) dicker als innere Faservliesröhre (2) ist.

4. Röhre nach den Ansprüche 1 bis 3, dadurch gekennzeichnet, daß die äußere Faservliesröhre (3) mit der Längsverbindungsschmelznaht (5) versehen ist nach Ausbildung der Längsschmelznaht (4) in der inneren Faservliesröhre (2).

5. Röhre nach den Ansprüchen 1 bis 4, dadurch gekennzeichnet, daß die Dicke der inneren Faservliesröhre (2) in bezug auf die äußere Faservliesröhre (3) zwischen 1:1 und 1:3 liegt.

6. Verfahren zum Ausbilden einer Röhre aus Faservliesmaterial aus einem unter Wärme schmelzbaren Faservliesmaterial, enthaltend eine in Längsrichtung oder schraubenförmig verlaufende Verbindungsschmelznaht, wobei eine innere Faservliesröhre (2) von einer äußeren Faservliesröhre (3) umgeben ist, wobei die Faservliesröhren jeweils mit einer Längsschmelznaht (4, 5) versehen sind, die man durch einen Ultraschallaufschmelzvorgang erzielt, und eine Membran (8) für Membranfiltration innerhalb der inneren Röhre als faservliesmaterial niedergeschlagen ist, dadurch gekennzeichnet, daß die inneren und äußeren Faservliesröhren (2, 3) aneinander gegen gegenseitige Verschiebung befestigt werden, die Verbindungsschmelznaht (4) der inneren Faservliesröhre (2) und die Verbindungsschmelznaht (5) der äußeren Faservliesröhre in versetzter Weise angebracht werden und die äußere Schmelznaht (5) derart ausgebildet wird, daß eine Schicht aus nicht-verschmolzenem Faservliesmaterial der inneren Röhre (2) sich zwischen der äußeren Schmelznaht (5) und der Membran (8) befindet.

## Revendications

1. Tube en non-tissé soudable à chaud comprenant une soudure longitudinale ou en spirale, plus particulièrement une soudure longitudinale obtenue par soudage ultrasonique, ledit tube étant un tube composé (1) comprenant un tube en non-tissé interne (2) et un tube en non-tissé externe (3) entourant le tube en non-tissé interne (2), chacun avec une soudure longitudinale (4, 5), ledit tube en non-tissé interne (2) portant sur sa face interne une membrane de filtration (8), caractérisé en ce que les tubes en non-tissé (2, 3) sont mutuellement fixés pour les empêcher de se déplacer l'un par rapport à l'autre, en ce que la soudure (4) du tube en non-tissé interne (2) et la soudure (5) du tube en non-tissé externe (3) sont décalées, et en ce qu'il y a une épaisseur de non-tissé non soudé dudit tube interne (2) entre la membrane (8) et ladite soudure externe (5).

2. Tube selon la revendication 1, caractérisé en ce que les tubes en non-tissé interne et externe (2, 3) sont localement reliés par un moyen adhésif, plus particulièrement une colle (6).

3. Tube selon la revendication 1 ou 2, caractérisé en ce que le tube en non-tissé externe (3) est plus épais que le tube en non-tissé interne (2).

4. Tube selon l'une des revendications 1 à 3, caractérisé en ce que ladite soudure longitudinale (5) du tube en non-tissé externe (3) est réalisée après la soudure longitudinale (4) du tube en non-tissé interne (2).

5. Tube selon l'une des revendications 1 à 4, caractérisé en ce que le rapport entre l'épaisseur du tube en non-tissé interne (2) et celle du tube en non-tissé externe (3) est compris entre 1/1 et 1/3.

6. Méthode pour fabriquer un tube en non-tissé à partir d'un non-tissé soudable à chaud, comprenant une soudure longitudinale ou en spirale, dans laquelle un tube en non-tissé interne (2) est entouré par un tube en non-tissé externe (3), lesdits tubes en non-tissé étant chacun prévus avec une soudure longitudinale (4, 5) obtenue par un procédé de soudage ultrasonique, et une membrane de filtration (8) est déposée dans le tube interne en non-tissé, caractérisé en ce que lesdits tubes en non-tissé interne (2, 3) sont mutuellement fixés pour les empêcher de se déplacer l'un par rapport à l'autre, en ce que la soudure (4) du tube en non-tissé interne (2) et la soudure (5) du tube en non-tissé externe sont décalées, et en ce que ladite soudure externe est réalisée de telle sorte qu'il y a une épaisseur de non-tissé non soudé du tube interne (2) entre ladite soudure externe (5) et la membrane (8).

FIG. 1

FIG. 2

Fig. 3